# EUROPÄISCHE PATENTSCHRIFT

(11) **EP 2 034 192 B1**
(45) Veröffentlichungstag und Bekanntmachung des Hinweises auf die Patenterteilung: **26.03.2014**
(21) Anmeldenummer: 08015314.1
(22) Anmeldetag: 29.08.2008
(51) Int. Cl.: F15B 21/00

(54) **Verschlussstopfen**
Stopper
Bouchon de fermeture

(30) Priorität: 10.09.2007 DE 102007042997
(43) Veröffentlichungstag der Anmeldung: 11.03.2009
(73) Patentinhaber: MARCO SYSTEMANALYSE UND ENTWICKLUNG GmbH, D-85221 Dachau (DE)
(72) Erfinder: Reuter, Martin, 85221 Dachau (DE)
(74) Vertreter: Manitz, Finsterwald & Partner GbR

(56) Entgegenhaltungen:
- US-A- 3 525 453
- US-A- 4 867 333
- US-A- 5 078 294
- US-A- 5 779 085

## Beschreibung

Die vorliegende Erfindung betrifft Verschlussstopfen für Bohrungen, umfassend einen zylindrischen Mantelkörper aus Stahl, der an seiner äußeren Umfangsfläche eine Verzahnung aufweist.

Derartige Verschlussstopfen sind grundsätzlich bekannt (vgl. US 4 867 333 A) und dienen dazu, in hydraulischen Systemen Bohrungen zu verschließen. Bekannte Verschlussstopfen sind napfartig ausgebildet und werden mit Hilfe einer in den Napf eingepressten Kugel verformt, um sich mit der Verzahnung in die Wandung der Bohrung einzukrallen. Dies bedeutet, dass der Mantelkörper aus relativ weichem Material sein muss, da dieser ansonsten nicht mit Hilfe der Kugel oder eines Kegels gedehnt werden könnte. Problematisch ist hierbei, dass es in Einzelfällen vorkommen kann, dass sich ein solcher Verschlussstopfen bei hohen Drücken aus der Bohrung löst.

Es ist die Aufgabe der vorliegenden Erfindung, einen Verschlussstopfen zu schaffen, der bei niedrigen Herstellungskosten und einfacher Montage eine sichere Verankerung in der zugehörigen Bohrung gewährleistet.

Die Lösung dieser Aufgabe erfolgt durch die Merkmale des Anspruchs 1.

Nach der Erfindung ist in dem Mantelkörper ein Boden vorgesehen, der in axialer Richtung gesehen im Bereich der Verzahnung vorgesehen ist. Ein solcher Boden bildet eine Querverstrebung für die ihn umgebenden Wände des Mantelkörpers, so dass sich der Mantelkörper beim Eintreiben des Verschlussstopfens in die Bohrung nicht unerwünscht nach innen durchbiegt. Da der Boden in Einsetzrichtung des Verschlusstopfens gewölbt ist, sorgt ein an dem Boden anstehender Fluiddruck dafür, dass der Verschlussstopfen durch den Boden zusätzlich in der Bohrung verkeilt wird, da die von dem anstehenden Druck erzeugte Kraft über den Boden auf die Innenseite des Mantelkörpers umgelenkt wird.

Der erfindungsgemäße Verschlussstopfen beruht auf der Erkenntnis, dass bei einem relativ weichen Material oder nur oberflächengehärtetem Material ein sicheres Verkrallen des Verschlussstopfens in der Bohrung nicht gewährleistet ist. Der erfindungsgemäße Verschlussstopfen lässt sich mit einem Setzwerkzeug einsetzen und kann in einer glatten Bohrung eingesetzt werden, ohne dass es dabei auf die Oberflächenrauhigkeit der Bohrung ankommen würde. Da der Verschlussstopfen aus durchgehärtetem Stahl besteht, unterliegt dieser beim Einbringen in eine Bohrung keiner plastischen Verformung.

Vorteilhafte Ausführungsformen der Erfindung sind in der Beschreibung, der Zeichnung sowie den Unteransprüchen beschrieben.

Nach einer ersten vorteilhaften Ausführungsform kann der Außendurchmesser der Verzahnung zunehmen, wodurch ein leichtes Einsetzen des Verschlussstopfens in der dazugehörigen Bohrung sichergestellt ist. Insbesondere wenn der Außendurchmesser der Verzahnung kontinuierlich zunimmt, lässt sich der Verschlussstopfen besonders gut mit seiner Verzahnung in der Mantelfläche der Bohrung verkeilen.

Nach einer weiteren Ausführungsform der Erfindung kann der Mantelkörper einen zylindrischen Abschnitt aufweisen, wobei die Spitzen der Verzahnung auf einer Kegelfläche angeordnet sind, die mit dem zylindrischen Abschnitt einen Winkel von etwas weniger als 180° einschließt, und die sich insbesondere kegelförmig von dem zylindrischen Abschnitt erweitert. Bei dieser Ausführungsform ist durch den zylindrischen Abschnitt ein leichtes Einsetzen des Verschlussstopfens in die Bohrung gewährleistet, wobei die auf einer Kegelfläche angeordneten Verzahnungsspitzen dafür sorgen, dass mit zunehmendem Eintreiben des Verschlussstopfens in die Bohrung ein zunehmend tieferes Verkeilen erfolgt.

Nach einer weiteren vorteilhaften Ausführungsform kann der Mantelkörper einen ersten zylindrischen Abschnitt aufweisen, an den sich die Verzahnung anschließt, wobei im Anschluss an die Verzahnung ein weiterer zylindrischer Abschnitt vorgesehen sein kann, dessen Außendurchmesser geringer ist als der des ersten zylindrischen Abschnitts. Auf diese Weise ist durch den weiteren zylindrischen Abschnitt im Bereich der äußeren Stirnseite des Verschlusstopfens eine Einziehung geschaffen, die dadurch zu einem Formschluss herangezogen werden kann, dass das umgebende Material der Bohrung beim Setzen des Verschlussstopfens verstemmt wird. Hierdurch ist der Verschlussstopfen nicht nur durch die Verzahnung sondern auch noch zusätzlich durch die Verstemmung gehalten.

Wenn in dem Mantelkörper eine Führungsausnehmung für ein Setzwerkzeug vorgesehen ist, lässt sich dieses besonders einfach und präzise ansetzen, wenn der Verschlussstopfen in die Bohrung eingebracht wird.

Es kann vorteilhaft sein, wenn der Boden in axialer Richtung gesehen etwa in der Mitte des Verschlussstopfens angeordnet ist, da in diesem Fall der Boden den Verschlussstopfen dann auf optimale Weise stabilisiert.

Als vorteilhafte Materialien zur Herstellung des einstückigen Verschlussstopfens kommen Stähle, insbesondere Edelstähle in Frage, die eine Rockwell-Härte C von etwa 25 bis 50 aufweisen.

Nach einem weiteren Aspekt der vorliegenden Erfindung betrifft diese ein Setzwerkzeug zum Einbringen des vorstehend beschriebenen Verschlussstopfens in eine Bohrung, wobei dieses Setzwerkzeug an seiner Stirnseite einen zentralen Führungszapfen und einen diesen umgebenden Stemmring aufweist. Mit Hilfe des Führungszapfens lässt sich das Setzwerkzeug präzise an dem Verschlussstopfen ansetzen, wobei nach Einbringen des Verschlussstopfens in die Bohrung mit Hilfe des Stemmrings ein die Bohrung umgebendes Material so verstemmt werden kann, dass ein zusätzlicher Formschluss zwischen Verschlussstopfen und umgebenden Material geschaffen ist.

Nach einer vorteilhaften Ausführungsform ist der Stemmring im Querschnitt dreieckig und weist eine senkrecht zur Stirnseite verlaufende Stemmfläche auf, die während des Stemmvorgangs als Schneidkante dient. Weiterhin kann der Stemmring eine unter einem stumpfen Winkel zur Stirnseite des Setzwerkzeugs verlaufende Stemmfläche aufweisen, um eine besonders gute Materialverdrängung zu bewirken.

Nach einer weiteren vorteilhaften Ausführungsform weist das Setzwerkzeug an seiner Stirnfläche ein Prägeelement auf. Mit einem solchen Prägeelement lässt sich zuverlässig überprüfen, ob das Setzwerkzeug während des Setzvorgangs tief genug eingedrückt wurde, d.h. ein solches Prägeelement kann zur Qualitätskontrolle herangezogen werden.

Wenn das Prägeelement ein ringförmiger Vorsprung ist, lässt sich zusätzlich erkennen, ob das Setzwerkzeug rechwinklig oder schräg angesetzt wurde, so dass auch hier aus der in dem die Bohrung umgebenden Material entstehenden Prägung auf die Qualität bei der Montage rückgeschlossen werden kann.

Nach einem weiteren Aspekt betrifft die vorliegende Erfindung ein Verfahren zum Setzen eines vorstehend beschriebenen Verschlussstopfens mit einem vorstehend beschriebenen Setzwerkzeug sowie einen Körper mit einer Bohrung, in die ein vorstehend beschriebener Verschlussstopfen eingebracht ist.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine Querschnittsansicht eines Verschlussstopfens und eines Setzwerkzeuges vor dem Einbringen in eine Bohrung eines Körpers; und
- Fig. 2: eine vergrößerte Schnittansicht des Verschlussstopfens von Fig. 1, der in die Bohrung des Körpers eingebracht ist.

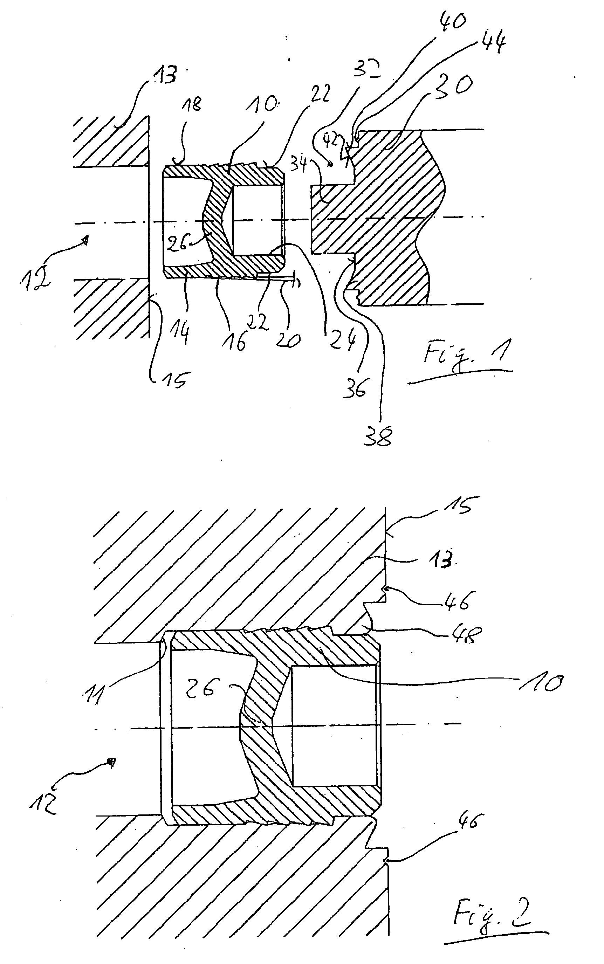

Fig. 1 zeigt einen Verschlussstopfen 10 zum Einbringen in eine zylindrische Bohrung 12 eines Körpers 13 aus Vollmaterial, der beispielsweise aus Stahl besteht. Hierbei ist der Verschlussstopfen 10 einstückig aus durchgehärtetem Edelstahl hergestellt, dadurch plastisch nicht verformbar, und weist einen Mantelkörper 14 auf, an dessen äußerer Umfangsfläche eine umlaufende Verzahnung 16 vorgesehen ist, die sägezahnartig ausgebildet ist.

Wie Fig. 1 zeigt, sind die Spitzen der Verzahnung 16 auf einer Kegelfläche angeordnet, die mit einem zylindrischen Abschnitt 18 des Mantelkörpers 14 einen Winkel einschließt, der nur etwas kleiner 180° ist. Mit anderen Worten, nimmt der Außendurchmesser der Verzahnung 16 von dem zylindrischen Abschnitt 18 des Mantelkörpers in Richtung der äußeren Stirnseite des Verschlussstopfens kontinuierlich zu.

In Axialrichtung gesehen schließt sich somit an den zylindrischen Abschnitt 18 des Mantelkörpers 14 zunächst die Verzahnung 16 an, wobei im Anschluss an die Verzahnung 16, d.h. am vorderen Stirnende des Verschlussstopfens 10, ein weiterer zylindrischer Abschnitt 22 vorgesehen ist, dessen Durchmesser geringer ist als der des ersten zylindrischen Abschnitts 18. Im Bereich dieses zweiten zylindrischen Abschnitts 22 sowie eines Teils der Verzahnung 16 ist an der Stirnseite des Verschlussstopfens eine im vorliegenden Ausführungsbeispiel zylindrische Führungsausnehmung 24 für ein Setzwerkzeug 30 vorgesehen.

Weiterhin weist der Verschlussstopfen10 in seinem Inneren einen Boden 26 auf, der in axialer Richtung gesehen etwa in der Mitte des Verschlussstopfens und im Bereich der Verzahnung 16 angeordnet ist. Dieser Boden 26 ist in Einsetzrichtung, d.h. in Richtung der Bohrung 12 gewölbt, so dass nach Einsetzen des Verschlussstopfens ein am Boden anstehender Fluiddruck den Verschlussstopfen in der Bohrung stabilisiert.

Das in Fig. 1 dargestellte Setzwerkzeug besteht aus einem zylindrischen Schaft, an dessen vorderer Stirnseite 32 ein zentraler Führungszapfen 34 vorgesehen ist, der in die Führungsausnehmung 24 des Verschlussstopfens 10 einsetzbar ist. An diesen Führungszapfen 34 schließt sich in radialer Richtung gesehen eine kreisringförmige Druckfläche 36 an, mit welcher der Verschlussstopfen 10 in axialer Richtung in die Bohrung 12 eingehämmert werden kann. Radial gesehen im Anschluss an die Druckfläche 36 weist die Stirnseite 32 des Setzwerkzeugs 30 einen umlaufenden Stemmring 38 auf, der im Querschnitt gesehen dreieckig ist und der eine senkrecht zur Druckfläche 24 verlaufende Stemmfläche 40 sowie eine unter einem stumpfen Winkel zur Druckfläche 36 verlaufende Stemmfläche 42 aufweist.

Radial außerhalb des Stemmrings 38 ist weiterhin an der Stirnfläche 32 des Setzwerkzeuges 30 ein Prägeelement in Form eines ringförmigen Vorsprungs 44 vorgesehen, der einen dreieckigen Querschnitt aufweist und in Draufsicht kreisringförmig ist.

Nachfolgend wird ein Verfahren zum Setzen des Verschlussstopfens 10 in der Bohrung 12 des Körpers 13 beschrieben.

Zunächst wird der Verschlussstopfen 10 mit seinem ersten zylindrischen Abschnitt 18 in die von Vollmaterial umgebene Bohrung 12 eingesetzt, was auf einfache Weise möglich ist, da der Durchmesser des zylindrischen Abschnitts 18 und der Bohrung 12 aufeinander abgestimmt sind. Anschließend wird das Setzwerkzeug 30 mit dem Führungszapfen 34 in die Führungsaufnahme 24 des Verschlussstopfens 10 eingesetzt und der Verschlussstopfen 10 wird mit Hilfe eines Hammers oder eines Werkzeugs in die Bohrung 12 axial von oben eingebracht, wobei sich die Verzahnung 16 in den Wänden der Bohrung 12 verkeilt. Da der Verschlussstopfen aus durchgehärtetem Stahl besteht und mit Hilfe des Bodens 26 versteift ist, verändert der Verschlussstopfen seine Form beim Einbringen nicht, so dass die Verzahnung sich in den Körper 13 einbohrt.

Sobald der Stemmring 42 die vordere Stirnseite 15 des Körpers 13 berührt, verdrängt der Stemmring 38 Material des Körpers 13 in Richtung des Verschlussstopfens 10 und füllt den Bereich zwischen der äußersten Verzahnung 16 und dem zweiten zylindrischen Abschnitt 22 mit Material 48 (vgl. Fig. 2), wodurch der Verschlussstopfen 10 alleine durch Einschlagen in die Bohrung zusätzlich durch Formschluss in der Bohrung 12 gehalten ist.

Nur wenn das Setzwerkzeug 30 vollständig und mit ausreichender Kraft gegen die Stirnseite 15 des Körpers 13 gepresst wird, drückt sich der Prägering 44 in die Oberfläche 15 des Körpers 13 ein, so dass anschließend eine gleichmäßige, ringförmige Prägung 46 verbleibt, die anzeigt, dass der Verschlussstopfen ordnungsgemäß in der Bohrung verstemmt ist.

Wie Fig. 2 verdeutlicht, kann die Bohrung 12 stufenlos sein bzw. muss und soll der Verschlussstopfen 10 eine Stufe 11 der Bohrung nicht berühren.

### Bezugszeichenliste

- 10: Verschlussstopfen
- 11: Stufe
- 12: Bohrung
- 13: Körper
- 14: Mantelkörper
- 15: Oberfläche
- 16: Verzahnung
- 18: erster zylindrischer Abschnitt
- 20: Kegelfläche
- 22: zweiter zylindrischer Abschnitt
- 24: Führungsausnehmung
- 26: Boden
- 30: Setzwerkzeug
- 32: Stirnseite
- 34: Führungszapfen
- 36: Druckfläche
- 38: Stemmring
- 40, 42: Stemmfläche
- 44: Prägering
- 46: Prägung
- 48: Verstemmung

## Patentansprüche

1. Verschlussstopfen (10) aus durchgehärtetem Stahl für Bohrungen, umfassend einen zylindrischen Mantelkörper (14), der an seiner äußeren Umfangsfläche eine Verzahnung (16) aufweist, **dadurch gekennzeichnet, daß** in dem Mantelkörper (14), in axialer Richtung gesehen, im Bereich der Verzahnung (16) ein Boden (26) vorgesehen ist, der in Einsetzrichtung des Verschlussstopfens (10) gewölbt ist.

2. Verschlussstopfen nach Anspruch 1,
**dadurch gekennzeichnet, dass**
der Außendurchmesser der Verzahnung (16) insbesondere kontinuierlich zunimmt.

3. Verschlussstopfen nach Anspruch 1 oder 2,
**dadurch gekennzeichnet, dass**
der Mantelkörper (14) einen zylindrischen Abschnitt (18) aufweist, und dass die Spitzen der Verzahnung auf einer Kegelfläche (20) angeordnet sind, die mit dem zylindrischen Abschnitt einen Winkel von etwas weniger als 180° einschließt.

4. Verschlussstopfen nach zumindest einem der vorstehenden Ansprüche,
**dadurch gekennzeichnet, dass**
der Mantelkörper (14) einen ersten zylindrischen Abschnitt (18) aufweist, an den sich die Verzahnung (16) anschließt, und dass im Anschluss an die Verzahnung (16) ein weiterer zylindrischer Abschnitt (22) vorgesehen ist, dessen Durchmesser geringer ist als der des ersten zylindrischen Abschnitts (18).

5. Verschlussstopfen nach zumindest einem der vorstehenden Ansprüche,
**dadurch gekennzeichnet, dass**
in dem Mantelkörper (14) eine Führungsausnehmung (24) für ein Setzwerkzeug vorgesehen ist .

6. Verschlussstopfen nach Anspruch 1 oder 5,
**dadurch gekennzeichnet, dass**
der Boden (26) in axialer Richtung etwa in der Mitte des Verschlussstopfens (10) angeordnet ist.

7. Verschlussstopfen nach zumindest einem der vorstehenden Ansprüche,
**dadurch gekennzeichnet, dass**
dieser eine Rockwell-Härte von etwa 25 - 50 aufweist und aus Edelstahl besteht.

8. Setzwerkzeug (30) zum Einbringen eines Verschlussstopfens (10) nach zumindest einem der vorstehenden Ansprüche in eine Bohrung (12),
**dadurch gekennzeichnet, dass**
dieses an seiner Stirnseite (32) einen zentralen Führungszapfen (34) und einen diesen umgebenden Stemmring (38) aufweist.

9. Setzwerkzeug nach Anspruch 8,
**dadurch gekennzeichnet, dass**
der Stemmring (38) im Querschnitt dreieckig ist und eine senkrecht zur Stirnseite (32) verlaufende Stemmfläche (40) aufweist und/oder eine unter einem stumpfen Winkel zur Stirnseite (32) verlaufende Stemmfläche (42) aufweist.

10. Setzwerkzeug nach Anspruch 8 oder 9,
**dadurch gekennzeichnet, dass**
der Stemmring (38) eine unter einem stumpfen Winkel zur Stirnseite (32) verlaufende Stemmfläche (42) aufweist.

11. Setzwerkzeug nach Anspruch 8,
**dadurch gekennzeichnet, dass**
an der Stirnfläche (32) ein Prägeelement (44) vorgesehen ist.

12. Setzwerkzeug nach Anspruch 12,
**dadurch gekennzeichnet, dass**
das Prägeelement ein ringförmiger Vorsprung (44) ist.

13. Setzwerkzeug nach einem der Ansprüche 11 oder 12,
**dadurch gekennzeichnet, dass**
das Prägeelement (44) radial außerhalb des Stemmrings (38) vorgesehen ist.

14. Verfahren zum Setzen eines Verschlussstopfens (10) nach zumindest einem der Ansprüche 1 - 7 mit einem Setzwerkzeug (30) nach zumindest einem der Ansprüche 8 - 13 in einer Bohrung (12) eines Körpers (13), wobei der Verschlussstopfen (10) mit dem Setzwerkzeug (30) so in die Bohrung (12) eingebracht wird, dass sich die Verzahnung (16) in der Bohrung (12) verkeilt, und wobei mit Hilfe des Stemmrings (38) ein die Bohrung (12) umgebendes Material (48) des Körpers (13) radial nach innen verstemmt wird und dadurch ein Herausbewegen des Verschlussstopfens (10) aus der Bohrung (12) zusätzlich verhindert wird.

15. Verfahren nach Anspruch 14,
**dadurch gekennzeichnet, dass**
mit Hilfe des Prägeelementes (46) in die Oberfläche (15) des Körpers (13) eine insbesondere ringförmige Prägung (46) eingebracht wird.

## Claims

1. A closure plug (10) of through hardened steel for bores, comprising a cylindrical jacket (14), whose outer peripheral surface features a toothed design (16),
**characterized in that**
when viewed in the axial direction, a base (26) is provided in the jacket (14) in the region of the toothed design (16) the base being arched in an insertion direction of the closure plug (10).

2. A closure plug in accordance with claim 1,
**characterized in that**
the outer diameter of the toothed design (16) increases and in particular continuously increases.

3. A closure plug in accordance with claim 1 or claim 2,
**characterized in that**
the jacket (14) has a cylindrical portion (18) and **in that** the tips of the toothed design are arranged on a conical surface (20) which encloses an angle of somewhat less than 180° to the cylindrical portion.

4. A closure plug in accordance with at least one of the preceding claims,
**characterized in that**
the jacket (14) includes a first cylindrical portion (18), followed by the toothed design (16) and **in that** following the toothed design (16) a further cylindrical portion (22) is provided, whose diameter is less than that of the first cylindrical portion (18).

5. A closure plug in accordance with at least one of the preceding claims,
**characterized in that**
a guiding recess (24) for a setting tool is provided in the jacket (14).

6. A closure plug in accordance with claim 1 or claim 5, **characterized in that**
the base (26) is arranged in the axial direction approximately at the middle of the closure plug (10).

7. A closure plug in accordance with at least one of the preceding claims,
**characterized in that**
this has a Rockwell hardness of approximately 25 - 50 and **in that** it consists of stainless steel.

8. A setting tool (30) for inserting a closure plug (10) in accordance with at least one of the preceding claims into a bore (12), **characterized in that**
the front side (32) of the setting tool comprises a central guiding pin (34) with a clinching ring (38) surrounding it.

9. A setting tool in accordance with claim 8,
**characterized in that**
the clinching ring (38) has a triangular cross section and comprises a clinching surface (40) extending perpendicular to the front side (32) and/or **in that** the clinching ring (38) has a clinching surface (42) extending at an obtuse angle from the front side (32).

10. A setting tool in accordance with claim 8 or claim 9,
**characterized in that**
the clinching ring (38) has a clinching surface (42) extending at an obtuse angle from the front side (32).

11. A setting tool in accordance with claim 8,
**characterized in that** a stamping element (44) is provided at the front end (32).

12. A setting tool in accordance with claim 12,
**characterized in that**
the stamping element is a ring shaped projection (44).

13. A setting tool in accordance with claim 11 or claim 12, **characterized in that**
the stamping element (44) is provided radially outside of the clinching ring (38).

14. A method for the setting of a closure plug (10) in accordance with at least one of the claims 1 to 7 with a setting tool (30) in accordance with at least one of the claims 8 to 13, into a bore (12) of a body (13), wherein the closure plug (10) is inserted into the bore (12) in such a way that the toothed design (16) wedges itself into the bore (12), and wherein, with the aid of the clinching ring (38), a material (48) of the body (13) surrounding the bore (12) is clinched radially inwards and through this a movement of the closure plug (10) out of the bore (12) is additionally prevented.

15. A method in accordance with claim 14,
**characterized in that**
a stamping, in particular, a ring shaped stamping (46) is introduced into the surface (15) of the body (13) with the aid of the stamping element (44).

## Revendications

1. Bouchon obturateur (10) en acier durci à coeur pour des perçages, comprenant un corps enveloppe cylindrique (14) qui présente une denture (16) sur sa surface périphérique extérieure, **caractérisé en ce que**, dans le corps enveloppe (14), vu en direction axiale, il est prévu un fond (26) dans la région de la denture (16), celui-ci étant bombé dans la direction de mise en place du bouchon obturateur (10).

2. Bouchon obturateur selon la revendication 1,
**caractérisé en ce que** le diamètre extérieur de la denture (16) augmente, en particulier en continu.

3. Bouchon obturateur selon la revendication 1 ou 2,
**caractérisé en ce que** le corps enveloppe (14) comprend un tronçon cylindrique (18), et **en ce que** les pointes de la denture sont agencées sur une surface conique (20) qui définit avec le tronçon cylindrique un angle légèrement inférieur à 180°.

4. Bouchon obturateur selon l'une au moins des revendications précédentes,
**caractérisé en ce que** le corps enveloppe (14) comprend un premier tronçon cylindrique (18) auquel se raccorde la denture (16), et **en ce qu'**il est prévu à la suite de la denture (16) un autre tronçon cylindrique (22) dont le diamètre est inférieur à celui du premier tronçon cylindrique (18).

5. Bouchon obturateur selon l'une au moins des revendications précédentes,
**caractérisé en ce qu'**il est prévu dans le corps enveloppe (14) un évidement de guidage (24) pour un outil de pose.

6. Bouchon obturateur selon la revendication 1 ou 5, **caractérisé en ce que** le fond (26) est agencé, en direction axiale, approximativement au milieu du bouchon obturateur (10).

7. Bouchon obturateur selon l'une au moins des revendications précédentes,
**caractérisé en ce qu'**il présente une dureté Rockwell d'environ 25 à 50, et **en ce qu'**il est en acier spécial.

8. Outil de pose (30) pour introduire un bouchon obturateur (10) selon l'une au moins des revendications précédentes dans un perçage (12), **caractérisé en ce que** celui-ci présente sur sa face frontale (32) un tenon de guidage central (34), et une bague de matage (38) qui entoure celui-ci.

9. Outil de pose selon la revendication 8,
**caractérisé en ce que** la bague de matage (38) est triangulaire en section transversale et présente une surface de matage (40) perpendiculaire à la face frontale (32) et/ou une surface de matage (42) s'étendant sous un angle obtus par rapport à la face frontale (32).

10. Outil de pose selon la revendication 8 ou 9,
**caractérisé en ce que** la bague de matage (38) présente une surface de matage (42) s'étendant sous un angle obtus par rapport à la face frontale (32).

11. Outil de pose selon la revendication 8,
**caractérisé en ce qu'**un élément de matriçage (44) est prévu sur la surface frontale (32).

12. Outil de pose selon la revendication 12,
**caractérisé en ce que** l'élément de matriçage est une saillie de forme annulaire (44).

13. Outil de pose selon l'une des revendications 11 ou 12,
**caractérisé en ce que** l'élément de matriçage (44) est prévu radialement à l'extérieur de la bague de matage (38).

14. Procédé pour la pose d'un bouchon obturateur (10) selon l'une au moins des revendications 1 à 7 avec un outil de pose (30) selon l'une au moins des revendications 8 à 13 dans un perçage (12) d'un corps (13), dans lequel le bouchon obturateur (10) est amené avec l'outil de pose (30) dans le perçage (12) de telle façon que la denture (16) se coince dans le perçage (12), et dans lequel un matériau (48) du corps (13) qui entoure le perçage (12) est maté radialement vers l'intérieur avec l'aide de la bague de matage (38), et empêche additionnellement de ce fait un mouvement sortant du bouchon obturateur (10) hors du perçage (12).

15. Procédé selon la revendication 14,
**caractérisé en ce qu'**une empreinte (46), en particulier de forme annulaire, est appliquée avec l'aide de l'élément de matriçage (46) dans la surface (15) du corps (13).
